# EUROPEAN PATENT APPLICATION

(11) **EP 1 605 412 A2**
(43) Date of publication of application: **14.12.2005**
(21) Application number: 05005345.3
(22) Date of filing: 11.03.2005
(51) Int. Cl.: G07C 9/00

(54) **Multi-identification method and multi-identification apparatus**

(30) Priority: 12.03.2004 JP 2004070259
(71) Applicant: MATSUSHITA ELECTRIC INDUSTRIAL CO., LTD., Kadoma-shi, Osaka 571-8501 (JP)
(72) Inventor: Ikoma, Ken, Yokohama-shi Kanagawa-ken 225-0023 (JP); Wakiyama, Koji, Yokohama-shi Kanagawa-ken, 227-0063 (JP)
(74) Representative: Pautex Schneider, Nicole Véronique

(57) **Abstract**

A multi-identification apparatus includes a first identification device which executes a first personal identification on a person to be identified, an image pickup unit which takes image data of the person, a controller which presets the image pickup unit on the basis of a person-featuring information of the person obtained from the first identification device, a second identification device which executes a second personal identification on the basis of the image data of the person, and a processing device which determines an integrated identification result based on an identification result of the first identification device and an identification result of the second identification device.

## Description

### BACKGROUND OF THE INVENTION

The present invention relates to a multi-identification method for performing personal identifications of plural kinds to improve an identification precision, and an apparatus for the method. More particularly, the invention relates to a multi-identification method capable of performing identifications of plural kinds for a short time period, and an apparatus for the method.

There are various kinds of personal identification methods with an ID card, a fingerprint, a venous pattern, the shaping features of a face, an iris or the pattern of a retina.

For an identification precision the closer to 100 %, however, an identification apparatus of the higher performance is needed to raise the cost and obstruct wide propagation. For the personal identification, therefore, a related method has been improved in the identification precision by performing identifications of plural kinds without aiming at higher functions of the individual identification apparatus (as referred to JP-A-2002-230553, JP-A-2003-30154 and JP-A-2003-58508).

In the related personal identification according to the identifications of the plural kinds, however, the identification with the iris is performed after the identification with the ID card, for example. As a result, the total time period for the identification is elongated to cause a problem that the waiting time of the person to be identified is elongated.

### SUMMARY OF THE INVENTION

An object of the invention is to provide a multi-identification method which can perform identifications of plural kinds for a short time period thereby to shorten the standby time of a person to be identified, and an apparatus for the method.

In order to achieve the above object, according to the present invention, there is provided a multi-identification method, comprising:
performing a first personal identification on a person to be identified;
obtaining a person-featuring information of the person from the first personal identification;
presetting an image pickup unit on the basis of the person-featuring information;
performing a second personal identification on the basis of image data of the person taken by the image pickup unit; and
determining an integrated identification result based on an identification result of the first personal identification and an identification result of the second personal identification.

According to the present invention, there is also provided a multi-identification apparatus, comprising:
a first identification device which executes a first personal identification on a person to be identified;
an image pickup unit which takes image data of the person;
a controller which presets the image pickup unit on the basis of a person-featuring information of the person obtained from the first identification device;
a second identification device which executes a second personal identification on the basis of the image data of the person; and
a processing device which determines an integrated identification result based on an identification result of the first identification device and an identification result of the second identification device.

With the configuration and method, a satisfactory image can be acquired for a short time period by the image pickup unit of the second identification device thereby to shorten the time period needed for the entire identification.

Preferably, the first personal identification is one of the personal identifications using an ID card, a fingerprint, a voice print and a venous pattern. The second personal identification is one of the personal identifications using an iris image, a pattern of a retina, and a featuring shape of a face.

With the configuration and method, the identification processes of various kinds can be combined to configure an optimum multi-identification apparatus of a high security for a purpose.

Preferably, at least one of a taking direction of the image pickup unit and an illuminating direction for taking the person is preset.

With the configuration and method, an image suited for the identification at the second identification device can be promptly acquired.

Preferably, the person-featuring information includes at least one of stature information and a wearing of eyeglasses of the person.

With the configuration and method, an image suited for the identification at the second identification device can be promptly acquired.

Preferably, a storage which records the person-featuring information of the person is provided. The person-featuring information recorded in the storage is updated with new personal-featuring identification obtained by the second identification device.

For example, the storage is a recording medium in the IC card or in the identification apparatus.

With the configuration and method, at a next identification time, the references for a preset and a detection range can be updated to shorten the time period needed for a prompt next identification.

According to the invention, the identification apparatus can shorten the entire processing time, even if it is configured to enhance the identification precision by combining personal identifications of plural kinds, thereby to shorten the standby time of the person to be identified.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a block configuration diagram of a multi-identification apparatus according to a first embodiment of the invention.
Fig. 2 is an exterior front view of the multi-identification apparatus according to the first embodiment of the invention;
Fig. 3 is a n exterior front view of the multi-identification apparatus according to a modification of the first embodiment of the invention;
Fig. 4 is a flow chart showing a processing procedure of the multi-identification apparatus according to the first embodiment of the invention;
Fig. 5 is a block configuration diagram of a multi-identification apparatus according to a second embodiment of the invention; and
Fig. 6 is a flow chart showing a processing procedure of the multi-identification apparatus according to the second embodiment of the invention.

### DETAILED DESCRIPTION OF THE PREFERRED EMBODIMENTS

Embodiments of the invention will be described with reference to the accompanying drawings.

### (First Embodiment)

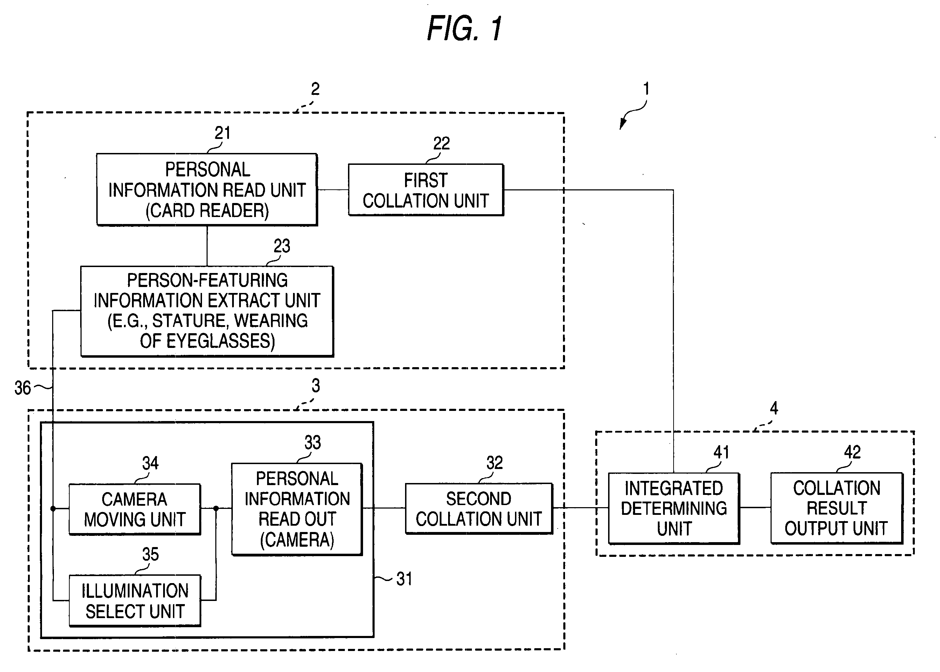

Fig. 1 is a functional block diagram of a multi-identification apparatus according to a first embodiment of the invention. This multi-identification apparatus 1 includes a first identification device 2 for identifying a person with an ID card, a second identification device 3 for identifying a person with an iris image, and an integrated processing device 4 for determining a personal identification integrally from the identification result of the first identification device 2 and the identification result of the second identification device 3.

The first identification device 2 has a personal information read unit (for example, a card reader) 21 for reading out the data recorded in the IC of the ID card owned by a person to be identified, a first collation unit 22 for collating the read data of the IC with the personal information in the person's own data, and a person-featuring information extract unit 23 for extracting person-featuring information such as "stature information" or "information on whether or not eyeglasses are worn" from the read data of the IC.

The second identification device 3 has an image pickup unit 31 for taking the iris image of the identified person, and a second collation unit 32 for collating the extracted features of the picked-up iris image with the features of the iris image of a person registered in database of the second identification device 3.

The image pickup unit 31 has a personal information read unit, i.e., a camera 33 as an image pickup unit for taking the iris image of the identified person, a camera moving unit 34 for panning and tilting the camera 33, and an illumination select unit 35 for selecting an illuminator to be actually used, from a plurality of near infrared illuminators for illuminating the direction of the eye of the identified person with near infrared rays. The camera moving unit 34 and the illumination select unit 35 are connected through a wiring line 36 with the person-featuring information extract unit 23 of the first identification device 2 so as to receive the stature data and the eyeglass wearing data extracted by the person-featuring extract unit 23.

The integrated processing device 4 has an integrated determining unit 41 for integrally determining whether or not the identified person is the registered person by fetching the collation result of the first collation unit 22 and the collation result of the second collation unit 32, and a collation result output unit 42 for outputting the integrally decided collation result.

The multi-identification apparatus 1 thus far described is disposed in a security-protected room or the like. However, the personal information read unit 21 and the person-featuring information extract unit 23, and the image pickup unit 31 are disposed in the wall near the door of the room or the like, and the remaining body units are disposed in the room.

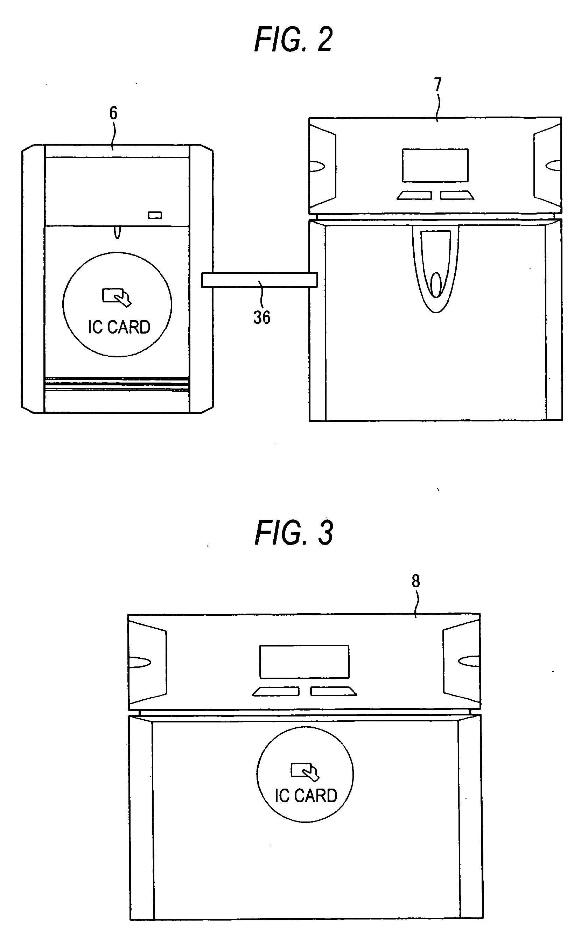

Fig. 2 is an exterior front elevation of that portion of the multi-identification apparatus 1, which is disposed in the wall near the door of the room or the like. The personal information read unit 21 and the person-featuring information extract unit 23 are mounted in a casing 6 for the card reader, and the image pickup unit 31 of the second identification device 3 is housed in a casing 7 for the camera. These casings are connected through the wiring line 36.

In this embodiment, the casing 6 for mounting the first identification device 2 and the personal information rear unit 21 and the casing 7 for mounting the image pickup unit 31 of the second identification device 3 are made separate, as shown in Fig. 2. As shown in Fig. 3, however, the personal information read unit 21 and the person-featuring information extract unit 23, and the image pickup unit 31 may also be mounted together in one casing 8.

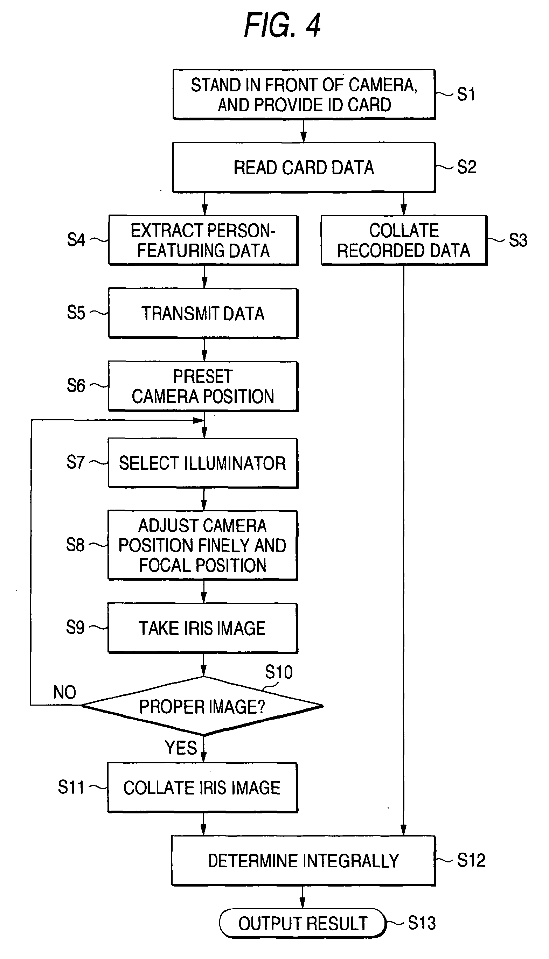

Fig. 4 is a flow chart showing a processing procedure of the multi-identification apparatus thus configured. The person to be identified stands in front of the image pickup unit 31 (or the casing 7), and provides his or her own ID card on the front portion of the casing 6 (at Step S1). Then, the card reader 21 of Fig. 1 reads out the data which is recorded in the IC of the ID card (at Step S2).

Next, the card reader 21 transfers the read data to the first collation unit 22. Then, this first collation unit 22 starts the collation between the registered data in the not-shown database and the recorded data (at Step S3). While the card reader 21 transfers the recorded data to the first collation unit 22, the information indicating the features of the person such as the stature data or the wearing of eyeglasses is extracted (at Step S4), and the extracted person-featuring information is transferred to the camera moving unit 34 and the illumination select unit 35 of the second identification device 3 (at Step S5).

After receiving the person-featuring information, the camera moving unit 34 presets a position of the camera 33 by panning and tilting movement in accordance with the stature information (at Step S6) so that the camera 33 may be directed to catch the eye of the identified person. On the other hand, the illumination select unit 34 selects such one from the plural illuminators as will not reflect into the camera 33, and turns ON that illuminator (at Step S7) in accordance with the information whether the identified person wears eyeglasses or not.
Next, the image data, outputted as the motion image data from the solid image pickup element of the camera 33, is analyzed to adjust the direction of the camera 33 finely to the position, at which the iris image of the identified person can be best taken, and to adjust the lens to a focused position (at Step S8). Then, the iris image to be collated is taken (at Step S9).

After the iris image is taken, it is decided (at Step S10) whether or not the iris image is proper for the collation treatment. In case the iris image is found to be out of focus or to be blotted with the illuminator image, the routine returns to the operation of Step S7, at which the iris image is taken again.

In case the taken iris image is proper for the collation, it is transferred to the second collation unit 32. This second collation unit 32 collates the featuring data extracted from the iris image and the registered featuring data of the iris image (at Step S11). Then, the integrated determining unit 41 decides whether or not the identified person is the registered one (at Step S12) from the collation result of the first collation unit 22 and the collation result of the second collation unit 32, and outputs the integrated decision result (at Step S13).

According to the first embodiment, the personal identification with the ID card and the personal identification with the iris image can be finished for a shorter time period than that of both the time periods individually required for the personal identifications. This shortening is reasoned in the following.

When the identification with the iris image is performed, it is necessary to take the iris image of the identified person. It takes a time to take the iris image. In the system using two cameras, for example, it is necessary to search a portion having a face image from the image taken by a wide-angle camera by a pattern-matching operation, to calculate the position of right-hand or left-hand eye from the sought position of the face, and to pan and tilt the camera to direct the telescopic camera to the eye position. These operations take a long time.

Moreover, the position of the illuminator to be reflected on the iris image becomes different for the cases, in which the identified person wears the eyeglasses and not. In the case of the prior art, it is necessary to take the iris images while turning ON the plural illuminators sequentially, and to repeat the illuminator selecting operations and the iris image taking operations either till the disappearance of the highly bright area or the area, on which any illuminator reflects, from the iris image or so that less iris images may be sufficient. These operations also take a long time.

On the other hand, in the embodiment of the present invention, the direction of the camera is preset by predicting the position of the face or eye of the identified person from the stature information of the person recorded in the ID card, so that the operations to search the face or eye position can be drastically omitted. Moreover, whether or not the identified person wears eyeglasses can be known from the recorded data in the ID card. Therefore, the illuminator to have no reflection on the iris image can be selected in advance so that its section can be finished for a short time period.

### (Second Embodiment)

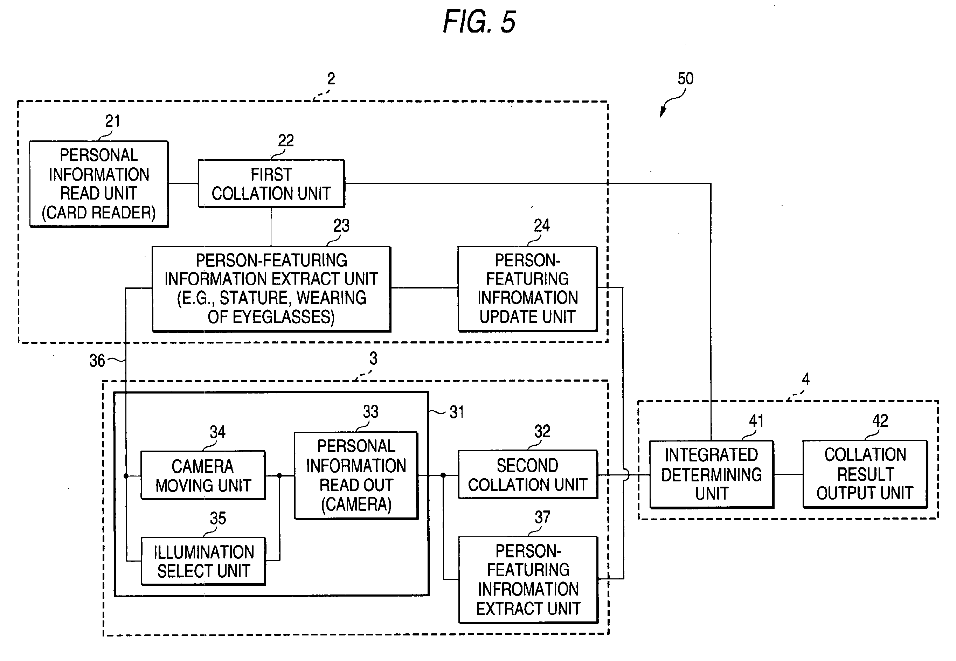

Fig. 5 is a functional block diagram of a multi-identification apparatus 50 according to a second embodiment of the invention. The configuration is substantially identical to that of the first embodiment shown in Fig. 1. Therefore, the detailed description of the blocks having the identical function is omitted by designating the blocks by the common reference numerals.

In the first embodiment, the person-featuring information on the stature or the person to be identified or the wearing of the eyeglasses is recorded in the ID card. Therefore, the personal information read unit 21 reads the personal information read unit 21 reads out the person-featuring information and transmits it to the second identification device 3. On the other hand, this embodiment is configured such that those pieces of person-featuring information are recorded in a database (i.e., personal information storage) in the first collation unit 22, and such that the person-featuring information extract unit 23 extracts the person-featuring information of the identified person, which has been confirmed by the first collation unit 22 in collation with the recorded data of the ID card, from the database and transmits the extracted information to the camera moving unit 34 and the illumination select unit 35 of the second identification device 3.

In this embodiment, moreover, the first identification device 2 has a person-featuring information update unit 24 for updating the person-featuring information in the database, and the second identification device 3 has a person-featuring information extract unit 37 for extracting the person-featuring information of the identified person.

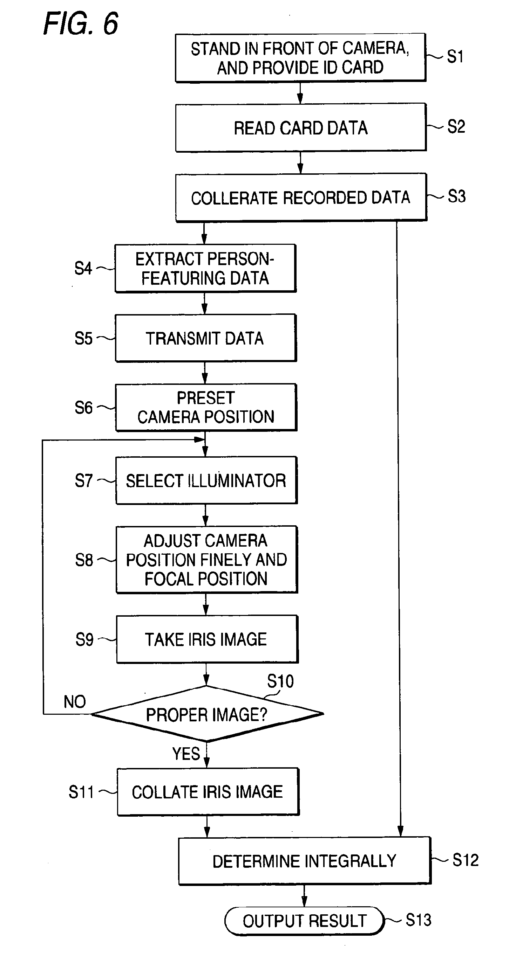

Fig. 6 is a flow chart showing a processing procedure in the multi-identification apparatus according to the second embodiment. This flow chart is identical to that of Fig. 4 of the first embodiment, excepting the operation of Step S4. Specifically, this embodiment is configured such that the person-featuring information is extracted from the stored data of the database after the identified person is identified by collating the recorded data of the ID card. The description of the subsequent processing procedures and contents is omitted by designating them by the common step numbers, because the procedures are identical to those of the first embodiment.

According to this embodiment, too, the identification with the ID card and the identification with the iris image can be promptly performed for a short time period.

In the embodiment shown in Fig. 5, the first identification device has the person-featuring information update unit 24, and the second identification device 3 has the person-featuring information extract unit 37. These units perform the following operations.

In case the identified person is in a growing period to have an extending stature, for example, the person may have a stature different from that in the stored data of the database. Alternatively, the identified person may grow poorer in sight to wear eyeglasses. In these cases, the featuring information such as the stature determined at this identifying time is different from that in the database. Therefore, the featuring information of the identified person, as obtained at this identifying time, is extracted by the person-featuring information extract unit 37. In case this extracted featuring information is found to be uncoincident from the featuring information in the database, the featuring information in the database is updated by the person-featuring information update unit 24. This process can shorten the time period for the next identifying operation.

The contents of the ID card can be rewritten and updated with the newly detected person-featuring information, if the person-featuring information extract unit 37 and the person-featuring information update unit 24 are applied to the first embodiment.

This second embodiment can be applied to a multi-identification apparatus of another kind. The identification with the ID card can be replaced by an identification with a fingerprint, a venous pattern of a finger, a palm print, a voice (or a voice print) or the like. Moreover, the entire identification processing time can be shortened, if the person-featuring information is extracted according to the first identification result from the stored data of the database and is utilized for presetting the camera for the second identification.

The second identifying operation has been described as that using the iris image, but should not be limited to the use of the iris image if it employs a camera (or image pickup means). The identification may be made with the featuring shape of a face by taking the entire face with the case, or with the pattern of a retina.

The invention can achieve the effect to the identifying operations of plural kinds for a short time period, and is useful when applied to a person-identifying apparatus of a high identification precision.

Although the present invention has been shown and described with reference to specific preferred embodiments, various changes and modifications will be apparent to those skilled in the art from the teachings herein. Such changes and modifications as are obvious are deemed to come within the spirit, scope and contemplation of the invention as defined in the appended claims.

## Claims

1. A multi-identification method, comprising:
performing a first personal identification on a person to be identified;
obtaining a person-featuring information of the person from the first personal identification;
presetting an image pickup unit on the basis of the person-featuring information;
performing a second personal identification on the basis of image data of the person taken by the image pickup unit; and
determining an integrated identification result based on an identification result of the first personal identification and an identification result of the second personal identification.

2. The multi-identification method as set forth in claim 1, wherein the first personal identification is one of the personal identifications using an ID card, a fingerprint, a voice print and a venous pattern; and
wherein the second personal identification is one of the personal identifications using an iris image, a pattern of a retina, and a featuring shape of a face.

3. The multi-identification method as set forth in claim 1, wherein at least one of a taking direction of the image pickup unit and an illuminating direction for taking the person is preset in the presetting process.

4. The multi-identification method as set forth in claim 1, wherein the person-featuring information includes at least one of stature information and a wearing of eyeglasses of the person.

5. The multi-identification method as set forth in claim 1, further comprising:
providing a storage which stores the person-featuring information; and
updating the personal-featuring information stored in the recording medium with new personal identification result which is obtained by the identification result of the second personal identification.

6. A multi-identification apparatus, comprising:
a first identification device which executes a first personal identification on a person to be identified;
an image pickup unit which takes image data of the person;
a controller which presets the image pickup unit on the basis of a person-featuring information of the person obtained from the first identification device;
a second identification device which executes a second personal identification on the basis of the image data of the person; and
a processing device which determines an integrated identification result based on an identification result of the first identification device and an identification result of the second identification device.

7. The multi-identification apparatus as set forth in claim 6, wherein the first personal identification is one of the personal identifications using an ID card, a fingerprint, a voice print and a venous pattern; and
wherein the second personal identification is one of the personal identifications using an iris image, a pattern of a retina, and a featuring shape of a face.

8. The multi-identification apparatus as set forth in claim 6, wherein the controller presets at least one of a taking direction of the image pickup unit and an illuminating direction for taking the person.

9. The multi-identification apparatus as set forth in claim 6, wherein the person-featuring information includes at least one of a stature information and a wearing of eyeglasses of the person.

10. The multi-identification apparatus as set forth in claim 6, wherein the first identification device includes a storage which records the person-featuring information of the person; and
wherein the person-featuring information recorded in the storage is updated with new personal-featuring identification obtained by the second identification device.
